# EUROPÄISCHE PATENTSCHRIFT

(11) **EP 0 643 108 B1**
(45) Veröffentlichungstag und Bekanntmachung des Hinweises auf die Patenterteilung: **02.12.1998**
(21) Anmeldenummer: 94113855.4
(22) Anmeldetag: 03.09.1994
(51) Int. Cl.: C09B 47/32, C09B 69/06, D06P 1/14

(54) **Imidazolylmethylierte Kupferphthalocyaninfarbstoffe**
Imidazolylmethyl derivatives of copper phthalocyanine dyestuffs
Colorants de phtalocyanines du cuivre imidazolméthyliques

(30) Priorität: 11.09.1993 DE 4330864
(43) Veröffentlichungstag der Anmeldung: 15.03.1995
(73) Patentinhaber: BASF Aktiengesellschaft, 67063 Ludwigshafen (DE)
(72) Erfinder: Hengelsberg, Heidi, Dr., D-68163 Mannheim (DE); Ruske, Manfred, D-67063 Ludwigshafen (DE); Mayer, Udo, Dr., D-67227 Frankenthal (DE)

(56) Entgegenhaltungen:
- EP-A- 0 034 725

## Beschreibung

Die vorliegende Erfindung betrifft neue basische Farbstoffe der Formel I 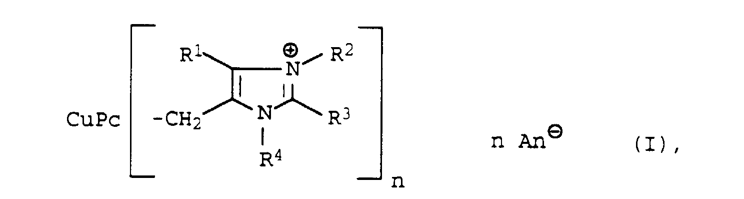 in der
- n: 1 bis 3,
- CuPc: einen Kupferphthalocyaninrest,
- R¹: Wasserstoff oder C₁-C₄-Alkyl,
- R²: C₁-C₄-Alkyl,
- R³: Wasserstoff oder C₁-C₄-Alkyl,
- R⁴: C₁-C₄-Alkyl und
- An^{⊖}: das Äquivalent eines Anions bedeuten,
mit der Maßgabe, daß R¹ und R³ nicht gleichzeitig für Wasserstoff stehen, ein Verfahren zu ihrer Herstellung, Farbstoffzubereitungen, enthaltend die neuen Farbstoffe, sowie die Verwendung der neuen Farbstoffe zum Färben oder Bedrucken von polymerem Material.

Aus der EP-A-34 725 sind Farbstoffe bekannt, die denen der Formel I ähnlich sind. Sie enthalten eine geringere Anzahl an Alkylgruppen.

Es hat sich jedoch gezeigt, daß die dort beschriebenen Farbstoffe nur über eine unbefriedigende Löslichkeit verfügen.

Aufgabe der vorliegenden Erfindung war es daher, neue basische Farbstoffe auf Basis von imidazolylmethylierten Kupferphthalocyaninen bereitzustellen, die eine sehr gute Löslichkeit aufweisen. Demgemäß wurden die eingangs näher bezeichneten basischen Farbstoffe der Formel I gefunden.

Reste R¹, R², R³ und R⁴ sind z.B. Methyl, Ethyl, Propyl, Isopropyl, Butyl, Isobutyl, sec-Butyl oder tert-Butyl.

Geeignete Anionen, die dem Äquivalent An^{⊖} eines Anions zugrunde liegen, sind z.B. Fluorid, Chlorid, Bromid, Iodid, Sulfat, Acetat, Propionat, Mono-, Di- oder Trichloracetat, Lactat, Methoxyacetat, Citrat, Succinat, Methansulfonat, Benzolsulfonat oder 2- oder 4-Methylbenzolsulfonat.

Bevorzugt sind basische Farbstoffe der Formel I, in der R¹, R² und R⁴ jeweils Methyl und R³ Wasserstoff bedeuten.

Weiterhin bevorzugt sind basische Farbstoffe der Formel I, in der n 2 bis 3, insbesondere ca. 3 bedeutet.

Bedingt durch die Synthese des im folgenden genannten Kupferphthalocyanins der Formel II, liegen die basischen Farbstoffe der Formel I üblicherweise als Gemische vor, d.h. n ist in der Regel keine ganze Zahl.

Es wurde weiterhin gefunden, daß die erfindungsgemäßen basischen Farbstoffe der Formel I vorteilhaft erhalten werden, wenn man ein Kupferphthalocyanin der Formel II 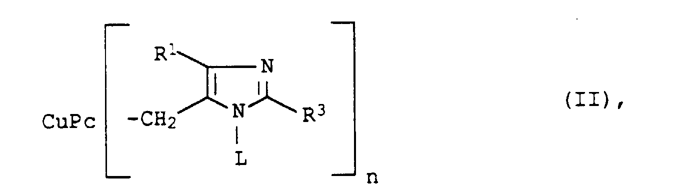 in der n, CuPc, R¹ und R³ jeweils die obengenannte Bedeutung besitzen und L Wasserstoff oder C₁-C₄-Alkyl bedeutet, mit einem Alkylierungsmittel der Formel III

R²-X (III),

in der R² die obengenannte Bedeutung besitzt und X eine Austrittsgruppe bedeutet, umsetzt.

Geeignete Austrittsgruppen X sind z.B. Chlor, Brom, Iod, Methosulfat, Ethosulfat oder ein Rest der Formel Y-SO₃, worin Y für Phenyl oder 2- oder 4-Methylphenyl steht.

Die Behandlung des Kupferphthalocyanins der Formel II mit dem Alkylierungsmittel III erfolgt in der Regel in wäßrigem Medium bei einer Temperatur von 20 bis 50°C, vorzugsweise 25 bis 45°C, in Gegenwart einer Base.

Geeignete Basen sind z.B. Natrium- oder Kaliumcarbonat, Magnesiumoxid, Magnesiumcarbonat oder Natrium- oder Kaliumacetat.

Je mol Kupferphthalocyanin II kommen in der Regel 5 bis 8 mol, vorzugsweise 5 bis 6,5 mol, Alkylierungsmittel III sowie 1 bis 3 Moläquivalent, vorzugsweise 1 bis 2,1 Moläquivalent, Base zur Anwendung.

Die Herstellung der erfindungsgemäßen basischen Farbstoffe wird zweckmäßig so vorgenommen, daß man Kupferphthalocyanin II, Wasser und Base vorlegt und bei einer Temperatur von 20 bis 50°C das Alkylierungsmittel zugibt. Danach wird das Gemisch 1 bis 3 Stunden bei obengenannter Temperatur gerührt. Das resultierende Reaktionsgemisch ist nach dem Abkühlen direkt gebrauchsfertig oder kann noch mit Wasser, Essigsäure, Milchsäure, Schwefelsäure oder einer Mischung dieser Substanzen versetzt werden.

Es ist auch möglich, die neuen Farbstoffe der Formel I herzustellen, indem man eine wäßrige Suspension des Kupferphthalocyanins II zusammen mit der Base zum Alkylierungsmittel III gibt. Bei dieser Variante kann man eine um ca. 10 bis 20 % stärkere Suspension anwenden als bei der obengenannten Arbeitsweise.

Die erfindungsgemäßen basischen Farbstoffe der Formel I können ebenfalls erhalten werden, indem man die Alkylierung in zwei Stufen vornimmt. Im ersten Verfahrensschritt wird hierbei zunächst eine 10 bis 15 gew.-%ige, wäßrige Suspension des Kupferphthalocyanins der Formel II in Gegenwart einer Base mit dem Alkylierungsreagenz III umgesetzt. Die so erhaltene Lösung versetzt man im nächsten Reaktionsschritt erneut mit dem Kupferphthalocyanin II in Form eines wäßrigen Preßkuchens mit einem Feststoffgehalt von ≥ 35 Gew.-% oder auch in Form eines getrockneten Pulvers. Anschließend wird durch Zugabe von weiterem Alkylierungsmittel III die Reaktion fortgeführt. Die im zweiten Schritt zugefügte Menge an Kupferphthalocyanin II richtet sich nach der gewünschten Endkonzentration der Lösung, die in der Regel 22 bis 34 Gew.-% beträgt.

Die Kupferphthalocyanine der Formel II sind an sich bekannt und z.B. in der EP-A-34 725 beschrieben, oder können nach den dort genannten Methoden erhalten werden.

Die neuen basischen Farbstoffe der Formel I weisen eine ausgezeichnete Wasserlöslichkeit auf, so daß sie vorzugsweise in Flüssigeinstellungen zur Anwendung kommen.

Demgemäß betrifft die vorliegende Erfindung weiterhin Farbstoffzubereitungen, enthaltend, jeweils bezogen auf das Gewicht der Farbstoffzubereitung, 22 bis 34 Gew.-%, vorzugsweise 26 bis 32 Gew.-%, eines basischen Farbstoffs der Formel I sowie 58 bis 70 Gew.-%, vorzugsweise 60 bis 68 Gew.-%, Wasser. Als (auf 100 Gew.-% zu ergänzende) Restmengen enthalten die erfindungsgemäßen Farbstoffzubereitungen in der Regel noch Salze.

Die erfindungsgemäßen basischen Farbstoffe der Formel I können für sich alleine, in Gemischen untereinander und zusammen mit anderen kationischen oder anionischen Verbindungen in Form ihrer Lösungen oder in Form von Pulvern oder Granulaten angewendet werden. Sie eignen sich vorteilhaft zum Färben oder Bedrucken von polymerem Material, insbesondere von Papierstoffen, aber auch von Cellulose, Baumwolle, Leder, Bastfasern, Hanf, Flachs, Sisal, Jute, Kokos oder Stroh.

Die Farbstoffe können vorzugsweise bei der Herstellung von in der Masse gefärbtem, geleimtem und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Mit den neuen Farbstoffen kann man auch Polyacrylnitriltextilien oder durch anionische Gruppen modifizierte Polyamid- oder Polyestertextilien färben, foulardieren oder bedrucken.

Die folgenden Beispiele sollen die Erfindung näher erläutern.

### Beispiel 1

150 g imidazolylmethyliertes Kupferphthalocyanin der Formel 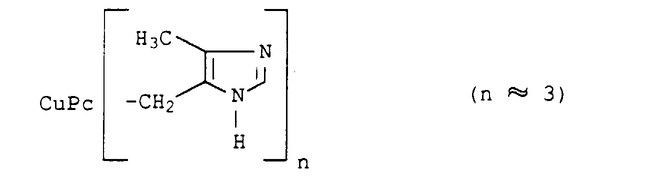 und 10 g Magnesiumoxid wurden in 430 g Wasser suspendiert. Anschließend tropfte man bei einer Innentemperatur von 30 bis 45°C 115 g Dimethylsulfat hinzu. Nach beendeter Zugabe rührte man 60 min bei der obengenannten Temperatur und abschließend 1,5 h bei 80 bis 90°C. Die nach dem Abkühlen erhaltene, niederviskose Lösung ist sofort gebrauchsfertig. Sie ist lagerstabil und enthält ca. 28 Gew.-% des Farbstoffes der Formel 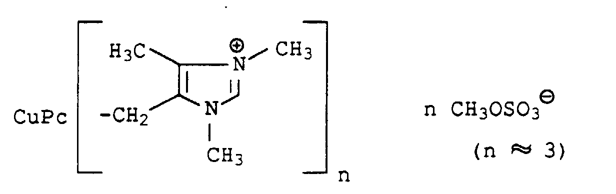 Sie löst sich leicht und rückstandslos in Wasser. Der Flüssigfarbstoff färbt Papier in türkisblauen Farbtönen.

### Beispiel 2

Man ersetzte das in Beispiel 1 verwendete Magnesiumoxid durch 36 g Natriumacetat. Man erhielt den Farbstoff des Beispiels 1.

Die Lagerstabilität der Farbstofflösung ist gut.

### Beispiel 3

Man verfuhr analog Beispiel 1, verwendete jedoch anstelle von Magnesiumoxid eine Mischung aus 5 g Magnesiumoxid und 18 g Natriumacetat. Man erhielt eine Farbstofflösung, die eine gleich gute Löslichkeit und Lagerstabilität aufweist.

### Beispiel 4

Man verfuhr analog Beispiel 1, verwendete jedoch anstelle von Dimethylsulfat 140 g Diethylsulfat. Man erhielt den Farbstoff der Formel 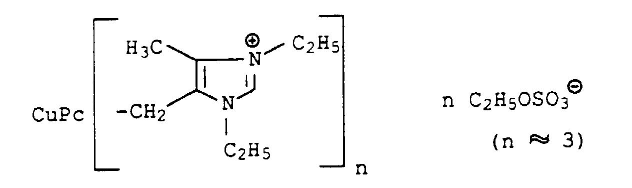 Die Flüssigeinstellung des Farbstoffs weist ebenfalls geringe Viskosität und gute Lagerstabilität auf.

### Beispiel 5

Eine Lösung des in Beispiel 1 beschriebenen Farbstoffes mit den gleichen anwendungstechnischen Eigenschaften wurde erhalten durch Zudosieren einer Suspension aus 150 g imidazolylmethyliertem Kupferphthalocyanin der Formel 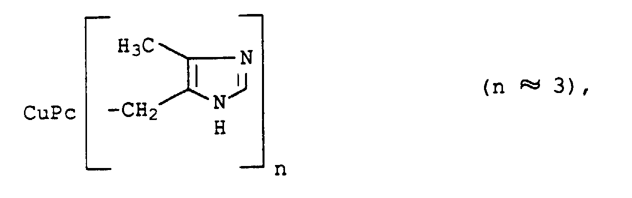 10 g Magnesiumoxid und 430 g Wasser zu 115 g Dimethylsulfat. Die Zutropfgeschwindigkeit wurde derart gesteuert, daß die Innentemperatur 30 bis 45°C nicht überschritt. Nach beendeter Zugabe verfuhr man wie in Beispiel 1 beschrieben.

Nach dieser Verfahrensvariante ist es außerdem möglich, eine Suspension, bestehend aus Kupferphthalocyanin, der Base und Wasser zu verwenden, deren Gehalt an Kupferphthalocyanin 10 bis 20 % höher ist als in Beispiel 1 beschrieben. Die erhaltene Farbstofflösung wird dann durch Zugabe einer entsprechenden Menge Wasser, Essigsäure, Milchsäure, Schwefelsäure oder Mischungen der genannten Substanzen in eine lagerstabile Farbstoffzubereitung übergeführt.

### Beispiel 6

220 g einer 15 gew.-%igen Suspension des imidazolylmethylierten Kupferphthalocyanins der Formel 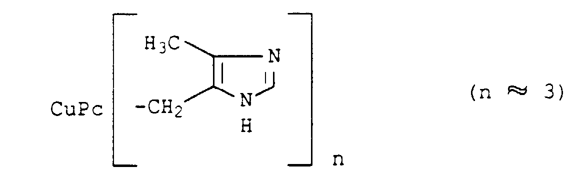 werden mit 3,6 g Magnesiumoxid versetzt. Anschließend tropfte man bei 30 bis 45°C 24,5 g Dimethylsulfat hinzu. Nach beendeter Zugabe wurden 198,4 g eines 38,2 gew.-%igen wäßrigen Preßkuchens des obengenannten Kupferphthalocyanins, 8 g Magnesiumoxid und anschließend tropfenweise 56,3 Dimethylsulfat zugegeben. Zur Vervollständigung der Umsetzung ließ man danach 45 min rühren und verfuhr dann wie in Beispiel 1 beschrieben. Die erhaltene Farbstofflösung wurde mit 21 g 30 gew.-%iger Essigsäure versetzt und entspricht in den anwendungstechnischen Eigenschaften der in Beispiel 1 beschriebenen Lösung.

In analoger Weise können die in der folgenden Tabelle aufgeführten Farbstoffe erhalten werden. Ihre Flüssigeinstellung ist ebenfalls lagerstabil.

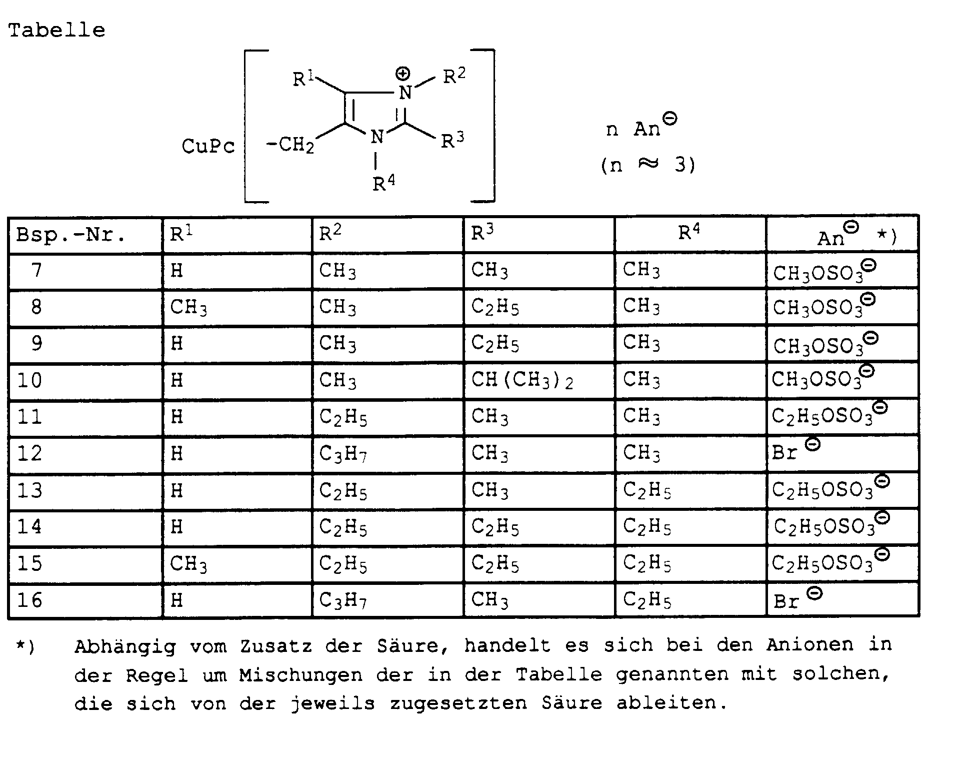

## Patentansprüche

1. Basische Farbstoffe der Formel I 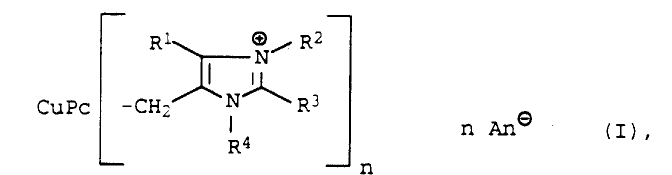 in der
n 1 bis 3,
CuPc einen Kupferphthalocyaninrest,
R¹ Wasserstoff oder C₁-C₄-Alkyl,
R² C₁-C₄-Alkyl,
R³ Wasserstoff oder C₁-C₄-Alkyl,
R⁴ C₁-C₄-Alkyl und
An^{⊖} das Äquivalent eines Anions bedeuten,
mit der Maßgabe, daß R¹ und R³ nicht gleichzeitig für Wasserstoff stehen.

2. Basische Farbstoffe nach Anspruch 1, dadurch gekennzeichnet, daß R¹, R² und R⁴ jeweils Methyl und R³ Wasserstoff bedeuten.

3. Basische Farbstoffe nach Anspruch 1, dadurch gekennzeichnet, daß n 2 bis 3 bedeutet.

4. Verfahren zur Herstellung der basischen Farbstoffe gemäß Anspruch 1, dadurch gekennzeichnet, daß man ein Kupferphthalocyanin der Formel II 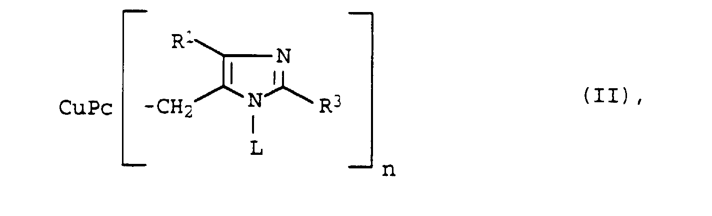 in der n, CuPc, R¹ und R³ jeweils die obengenannte Bedeutung besitzen und L Wasserstoff oder C₁-C₄-Alkyl bedeutet, mit einem Alkylierungsmittel der Formel III
R²-X (III),
in der R² die obengenannte Bedeutung besitzt und X eine Austrittsgruppe bedeutet, umsetzt.

5. Farbstoffzubereitungen, enthaltend, jeweils bezogen auf das Gewicht der Farbstoffzubereitung, 22 bis 34 Gew.-% eines basischen Farbstoffs der Formel I gemäß Anspruch 1 und 58 bis 70 Gew.-% Wasser.

6. Verwendung der basischen Farbstoffe gemäß Anspruch 1 zum Färben oder Bedrucken von polymerem Material.

## Claims

1. Basic dyes of the formula I 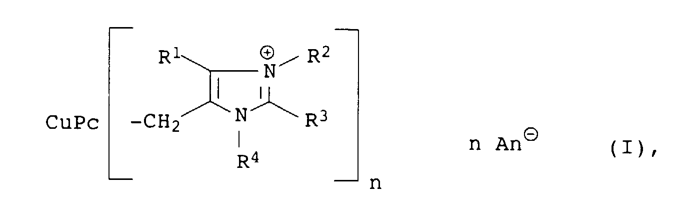 where
n is from 1 to 3,
CuPc is a copper phthalocyanine radical,
R¹ is hydrogen or C₁-C₄-alkyl,
R² is C₁-C₄-alkyl,
R³ is hydrogen or C₁-C₄-alkyl,
R⁴ is C₁-C₄-alkyl, and
An^{⊖} is the equivalent of an anion,
with the proviso that R¹ and R³ are not both hydrogen.

2. Basic dyes as claimed in claim 1 wherein R¹, R² and R⁴ are each methyl and R³ is hydrogen.

3. Basic dyes as claimed in claim 1 wherein n is from 2 to 3.

4. A process for preparing the basic dyes of claim 1, which comprises reacting a copper phthalocyanine of the formula II 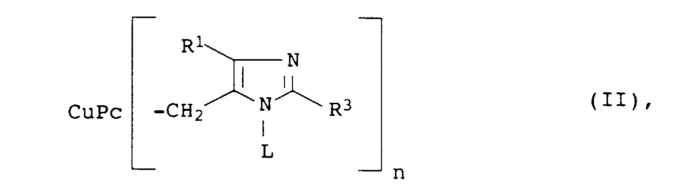 where n, CuPc, R¹ and R³ are each as defined above and L is hydrogen or C₁-C₄-alkyl, with an alkylating agent of the formula III
R²-X (III),
where R² is as defined above and X is a leaving group.

5. Dye formulations containing, in each case based on the weight of the dye formulation, from 22 to 34% by weight of a basic dye of the formula I as claimed in claim 1 and from 58 to 70% by weight of water.

6. The use of the basic dyes of claim 1 for dyeing or printing polymeric material.

## Revendications

1. Colorants basiques de formule I 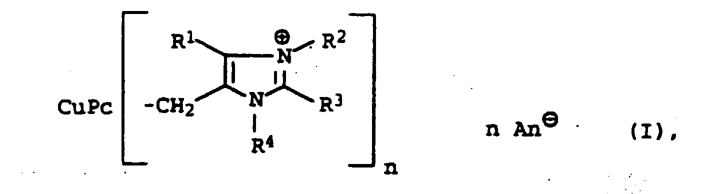 dans laquelle
n vaut 1 à 3,
CuPc représente un reste phtalocyanine de cuivre,
R¹ représente un atome d'hydrogène ou un groupement alkyle en C₁-C₄,
R² représente un groupement alkyle en C₁-C₄,
R³ représente un atome d'hydrogène ou un groupement alkyle en C₁-C₄,
R⁴ représente un groupement alkyle en C₁-C₄, et
An^{⊖} représente l'équivalent d'un anion,
étant spécifié que R¹ et R³ ne sont pas simultanément mis pour un atome d'hydrogène.

2. Colorants basiques selon la revendication 1, caractérisés en ce que R¹, R² et R⁴ représentent chacun un groupement méthyle et R³ un atome d'hydrogène.

3. Colorants basiques selon la revendication 1, caractérisés en ce que n vaut 2 ou 3.

4. Procédé de préparation de colorants basiques selon la revendication 1, caractérisé en ce que l'on fait réagir une phtalocyanine de cuivre de formule II 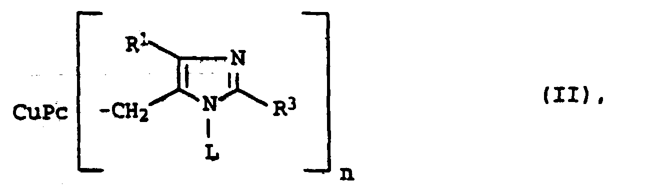 dans laquelle n, CuPc, R¹ et R³ prennent chacun la signification susmentionnée et L représente un atome d'hydrogène ou un groupement alkyle en C₁-C₄, avec un agent d'alkylation de formule III
R²-X (III),
dans laquelle R² prend la signification susmentionnée et X représente un groupe partant.

5. Préparation de colorants contenant 22-34% en poids d'un colorant basique de formule I selon la revendication 1 et 58-70% en poids d'eau, à chaque fois par rapport au poids de la préparation de colorants.

6. Utilisation de colorants basiques selon la revendication 1 pour la teinture et l'impression de matériaux polymères.
